# EUROPEAN PATENT SPECIFICATION

(11) **EP 0 694 734 B1**
(45) Date of publication and mention of the grant of the patent: **24.10.2001**
(21) Application number: 95305244.6
(22) Date of filing: 27.07.1995
(51) Int. Cl.: F23G 5/08, F23G 5/20, F23G 5/033

(54) **Apparatus for incinerating and melting wastes and method of using the same**
Vorrichtung zum Verbrennen und Schmelzen von Abfall und dessen Verwendung
Appareil pour l'incinération et la fusion de déchets et procédé d'utilisation

(30) Priority: 27.07.1994 JP 20790894; 21.08.1994 JP 23199594; 16.11.1994 JP 32179994; 31.01.1995 JP 5029795
(43) Date of publication of application: 31.01.1996
(73) Proprietor: Nishiyama, Shinroku, Yogogawa-ku, Osaka 532 (JP)
(72) Inventor: Nishiyama, Shinroku, Yogogawa-ku, Osaka 532 (JP)
(74) Representative: Waldren, Robin Michael

(56) References cited:
- WO-A-89/03241
- WO-A-92/06329
- DE-A- 3 605 785
- DE-C- 601 354
- FR-A- 2 575 271
- US-A- 3 386 394
- US-A- 4 417 529

## Description

### Background of the Invention

### (1) Field of the Invention

The present invention relates to a method of incinerating and melting wastes and an apparatus therefor, and particularly to the method and apparatus for incinerating and melting a combustible material, such as a waste of plastic products, paper products, woods, or rubber products and an incombustible material including metal products.

### (2) Prior Art

Recently, the amount of urban wastes generated for disposal has greatly increased due to a change of life style and gravitation of the population toward towns and cities.

The most important problem for disposing the wastes lies in its reduction of volume. Another problem nowadays is that the urban wastes include a harmful material. In view of effluence of the harmful materials from the wastes, there is a tendency not to simply lay the wastes under the ground, but to incinerate them.

Normally, the ashes of the urban wastes including those (fly ashes) collected by a bag-filter of a collector, were disposed such a manner that they were laid under the ground of a reclaimed land or the ground for civil engineering and construction at the time of ground concrete work.

However, the ashes are fine powders which adsorb dioxins and include incombustible heavy metals, and therefore it costs in transfer of the ashes since there is a great possibility that the ashes are scattered in the wind when treating and trasferring the same. Further, where the ashes are simply laid under the ground, the harmful materials included in or adborbed to the ashes are flown out therefrom due to rain and underground water so as to cause public polution. Therefore, it is required that disposal of the ashes should be carried out carefylly.

An amount of the ashes becomes great though the wastes are disposed to be incinerated so as to reduce their volume, since the volume of the urban wastes is increasing greatly. Further, where the ashes are simply laid under the ground, the harmful materials remained in the ashes/are flown out due to rain and underground water.

Recently, laws and rules concerning disposal of urban and industrial wastes are provided, so that it becomes responsible that the ashes of the wastes must be disposed via a second treatment after incineration.

As a method of further decreasing the volume of the ashes and resolving the harmful materials so as to prevent the harmful matreials from flowing out, it is resarched to melt the ashes. As a manner of melting the ashes, it is tried to use a plasma-electric melting, a high-frequency electric melting, and a heat melting by a burner.

As mentioned above, it is difficult technically to use the electric furnace since the objects to be incinerated and molten are almost nonferrous materials. The plasma-electric furnace is very expensive on a large scale and increases its installation cost.

Therefore, it is tried to melt the ashes by means of a conventional heat furnace having a burner which uses a gaseous, liquid or solid fuel. Such a heating means of burner type becomes popular recently considering generation of a high temperature, a high heat efficiency, a low running cost and easiness of burning control.

The burner uses an LPG, an NLG or other fuels, and the air for burning the fuel is supplied by means of an air compressor such as a centrifugal turbine pump or a vane pump and then mixed with the fuel.

This manner of combustion may generate a high temperature which melts the ashes of wastes, but it is difficult to control generation of a CO gas. Generation of the CO gas means that dioxins, which are closely connected with the CO gas, cannot be controled.

Anyway, in a conventional manner, it is based on an idea that incineration of the wastes is carried out in another process which is quite different from a melting process of their ashes. As the result, there are problems that it is necessary to provide two disposing installations for incinerating the wastes and melting the ashes thereof and that the costs for transfer of the wastes and ashes and also the fuel costs become very expensive.

Further, the molten object or slag are fragile after cooling the same and therefore there is no way except that they should be abandoned at a reclaimed land and laid under the ground.

WO 92/06329 describes a process for incinerating waste materials using a two-stage process. The first stage involves incinerating the waste in a rotating furnace, the second stage involves high temperature gasification of the waste from the first stage which contains combustible residues.

WO 89/03241 relates to a waste disposable process using oxygen combustion. The process comprises the steps of incinerating the waste in a gas containing at least 50% oxygen and then reducing the temperature of the furnace for removal of the waste products.

### Summary of the Invention

The present invention has an object to reduce the volume of the wastes through incineration and melt with a low cost of fuel, to resolve dioxins at a high temperature and to easily carry out a disposal of the molten object which is vitrified.

To achieve the above object, the apparatus for incinerating and melting wastes according to a first aspect of the present invention comprises:
a rotary furnace provided to be rotatable about a cylindrical axis thereof and to be tiltable about a horizontal axis which crosses the cylindrical axis at right angle, said rotary furnace having an opening at both ends thereof respectively,
waste throwing means for transferring and supplying wastes into the rotary furnace through one opening thereof, so as to repeat throw and incineration of the wastes for a plurality of times,
a burner of oxygen type for using an oxygen gas of 50% density and a fuel, provided at one end of the rotary furnace to open and close one opening thereof, said burner being constructed to melt the ashes of the wastes at a temperature of more than 1,600°C, to be vitrified, and
a dust collector connected to an exhaust duct which is connected to said another opening of the rotary furnace for cleaning an exhaust gas generated through incineration and melting processes.

It is preferable to throw at least a soda ash (Na₂CO₃) at the time of the melting step by mixing same with the wastes.

Further, it is preferable to throw at least one of solid fuels selected from cokes, coal and charcoal in the form of powder or lump, prior to the incinerating step or the melting step for assisting the incineration and melting.

Furthermore, it is preferable to provide a crusher for crushing the wastes prior to the waste throwing step.

To achieve the above object, the apparatus of or incinerating and melting wastes according to a second aspect of the present invention comprises:
a rotary furnace provided to be rotatable about a cylindrical axis thereof and to be tiltable about a horizontal axis which crosses the cylindrical axis at right angle, said rotary furnace having an opening at both ends thereof respectively,
waste throwing means for transferring and supplying wastes into the rotary furnace through one opening thereof, so as to repeat throw and incineration of the wastes for a plurality of times,
a burner of oxygen type for using an oxygen gas of 50% density and a fuel, provided at one end of the rotary furnace to open and close one opening thereof,
a melting furnace for receiving the wastes from the rotary furnace for melting the same,
a melting burner of oxygen type for using an oxygen gas of 50% density and a fuel, provided with the melting furnace and constructed to melt the ashes of the wastes at a temperature of more than 1,600°C, to be vitrified, and
a dust collector connected to an exhaust duct which is connected to said another opening of the rotary furnace and another exhaust duct which is connected to the opening of the melting furnace for cleaning the exhaust gas generated through incineration and melting processes.

To achieve the above object, the method of incinerating and melting wastes according to a third aspect of the present invention uses the apparatus of the first aspect of the present invention and comprises the steps of:
throwing wastes, by means of waste throwing means, from one opening of openings provided at both ends of a rotary furnace,
incinerating the wastes at a temperature from 800°C to 1,200°C, by means of a burner of oxygen type for using an oxygen gas having a density of more than 50%, and a fuel, so as to reduce their volumes,
throwing again next wastes and incinerating the same,
repeating throw of wastes and incineration thereof for a plurality of times;
melting ashes of the wastes pooled in the rotary furnace at a high temperature of more than 1,600°C, to be vitrified,
flowing out the molten ashes from the other opening of said openings of the rotary furnace for vitrification and disposal, and
introducing an exhaust gas generated in the incinerating and melting processes from said another opening to a dust collector for cleaning the same.

It is preferable to throw at least a soda ash (Na₂CO₃) at the time of the melting step.

Further, it is preferable to throw at least one of solid fuels selected from cokes, coal and charcoal in the form of powder or lump, prior to the incinerating step or the melting step for assisting the incineration and melting.

Furthermore, to achieve the above object, the method of incinerating and melting wastes according to a fourth aspect of the present invention uses the apparatus of the second aspect of the present invention and comprises the steps of:
throwing wastes, by means of waste throwing means, from one opening of openings provided with both ends of a rotary furnace ,
incinerating the wastes at a temperature from 800°C to 1,200°C, by means of a burner of oxygen type for using an oxygen gas having a density of more than 50%, and a fuel, so as to reduce their volumes,
throwing again next wastes and incinerating the same,
repeating throw of wastes and incineration thereof for a plurality of times,
transferring the ashes of the wastes to a melting furnace,
melting the ashes of the wastes and the remaining at a high temperature of more than 1,600°C, to be vitrified, and flowing out the molten object for disposal, and
introducing an exhaust gas generated in the incinerating and melting processes from said another opening of the rotary furnace and an opening of the melting furnace to a dust collector for cleaning the same.

Now, functions of the present invention will be described.

According to the present invention, it becomes possible not only to repeat to throw in and incinerate the wastes by means of the burner of oxygen type using an oxygen gas of 50% density, so as to reduce their volume, but also melt the ashes of the wastes when the ashes are stored to be a predetermined amount.

At the time of incineration of the wastes, it becomes possible to expect a more complete incineration of the wastes by utilizing the burner of oxygen type using an oxygen gas of 50% density, so as to increase a density of oxygen in the atmosphere of the rotary furnace and to produce an exhaust gas which has a low density of CO gas while resolving dioxins at a high temperature from 800°C to 1,200°C. Therefore, it is possible to control dioxins though the exhaust gas is discharged in the air through the dust collector.

Further, by repeating throw of the wastes and incineration thereof, it becomes possible not only to carry out reduction of their volumes, but also to preheat the rotary furnace with the combustible wastes, particularly any kinds of plastic rubbish having a high calorific power, so as to save a fuel cost for going up the temperature of the rotary furnace for melting the ashes of the wastes.

Furthermore, by means of the burner of oxygen type which may generate a very high temperature, it becomes possible to heat and melt the ashes, which are stored to be a predetermined amound, together with the soda ash, at a temperature of more than 1,600° C, so as to be vitrified. At the time of the melting, since the burner of oxygen type for using an oxygen gas of 50% density, it may go up a level of oxygen density in the rotary furnace so as to lower the level of C0 in the exhaust gas. This means that it is possible to prevent the harmful materials, which are produced due to the C0 gas and included in the exhaust gas from discharging via the dust collector.

Incombustible materials other than the ashes, such as metal, can be melt at the very high temperature and involved in the vitrified ashes.

Now, advantages of the present invention will be described.

The present invention has the advantages of reducing the volume of the wastes by repeating throw of the wastes and incineration thereof for a plurality of times utilizing a single rotary furnace and greatly saving a heating cost of the rotary furnace at a high temperature (about more than 1,600° C) with the calorific power of the wastes for the next melting step.

Further, since incineration and melting of the wastes are carried out by means of the burner of oxygen type using an oxygen gas of 50% density, it becomes possible not only to incinerate the fuel (for example an LPG) completely, but also reduce generation of C0 by increasing the density of oxygen in the rotary furnace so as to prevent produce of dioxins and resolve the dioxins through the incineration and melting at a very high temperature so that scattering of the harmful materials in the ashes may be prevented.

Furthermore, the ashes and the remaining materials ban be vitrified at a very high temperature (about more than 1,600° C) and the molten obect may prevent the harmful materials involved therein from flowing out under the ground due to rain and underground water where the molten object is laid under the ground.

Other objects and advantages of the present invention will be understood from the description of the embodiment on the basis of the drawings.

### Brief Description of the Drawings

The drawings show a preferred embodiment of a method of incinerating and melting wastes and an appratus therefor, wherein:
Fig. 1 is a vertical view of an arrangement plan of the apparatus for incinerating and melting the wastes according to the first embodiment,
Fig. 2 is a sectional side view of a rotary furnace according to the first embodiment,
Fig. 3 is a front view of the apparatus for incinerating and melting the wastes according to the first embodiment according to the second embodiment,
Fig. 4 is a plan view of the apparatus for incinerating and melting the wastes according to the first embodiment according to the second embodiment,
Fig. 5 is a front view showing operations of a rotary furnace and a melting furnace according to the second embodiment,
Fig. 6 is a side view of the rotary furnace and the melting furnace according to the second embodiment,
Fig. 7 is a sectional view of the essential portion of the rotary furnace according to the second embodiment, and
Fig. 8 is a front view showing operations of the melting furnace according to the second embodiment.

### Detailed Description of the Embodiments

The first embodiment of a method of incinerating and melting wastes and an apparatus therefor according to the present invention will be described in detail with reference to the drawings.

The method of the invention comprises the steps of throwing wastes, by means of a waste thrower 3 as waste throwing means, from one opening 1a of openings 1a and 1b provided at both ends of a rotary furnace 1, incinerating the wastes at a temperature from 800 C to 1,200° C, by means of a burner of oxygen type 2 for using an oxygen gas having a density of more than 50%, and a fuel such as an NLG or an LPG, so as to reduce their volumes, throwing again next wastes after reduction of their volume and incinerating the same, repeating throw of wastes and incineration thereof for a several times, thereafter melting ashes of the wastes pooled in the rotary furnace 1 by means of the burner of oxygen type 2 at a high temperature of more than 1,600°C, so that the ashes (the remaining) may be vitrified, flowing out the vitrified ashes from another opening 1b of the rotary furnace 1 for disposal, and introducing an exhaust gas generated in the incinerating and melting processes from said another opening 1b of the rotary furnace 1 to a dust collector 7 for cleaning the same.

It is preferable that the melting temperature should be more than 1,600°C, in order to vitrify the ashes completely, but it is sufficient that the temperature reaches around the said value since vitrification may be varied according to some conditions.

It is also preferable to throw the materials which mix the wastes, soda ash, glass collets, and limestone, so as to achieve a good vitrification. The soda ash means Na₂CO₃.

In the above method, it is possible to throw at least one of the solid fuels such as cokes, coke or charcol at the time of throwing the wastes.

The combined use of the solid fuel saves the consumption of oxygen and LPG at the time of incineration and melting of the was tes.

It is important to lower the cost of the expensive oxygen and LPG, since it is not necessary to go up the temperature for incineration of the waste other than the temperature for melting.

Of course, the solid fuel may be utilised in the melting process as an assistant energy source in order to go up the temperatures of the rotary furance and ashes.

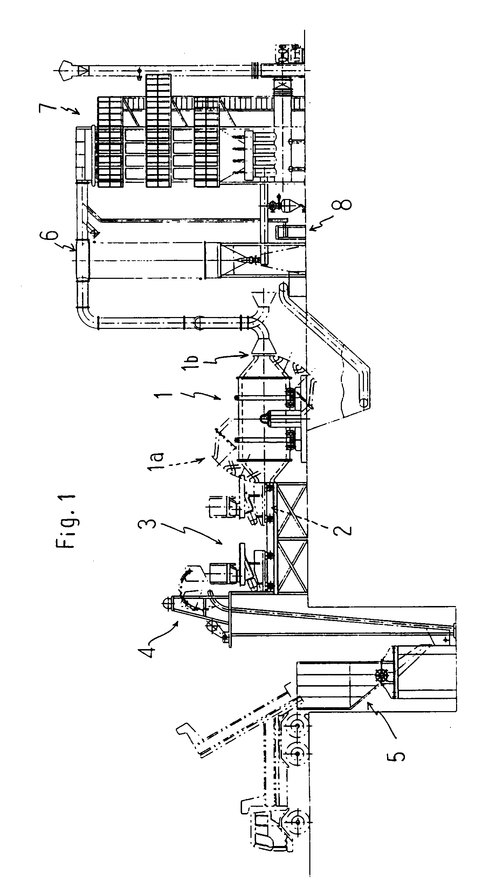

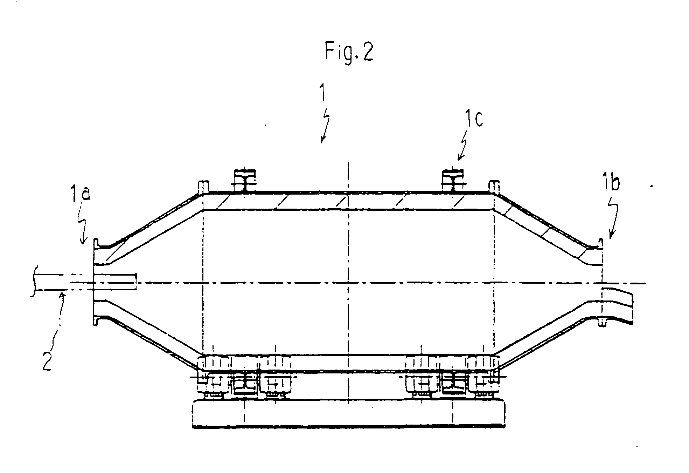

Now, the apparatus for incinerating and melting the wastes according to the invention will be described. Fig. 1 shows an arrangement plan of the apparatus and Fig. 2 is a sectional side view of the rotary furnace.

The numeral 1 is a rotary furance 1 and its detailed construction is as shown in Fig. 2. Namely, the rotary furnace 1 has openings 1a and 1b at both ends thereof and is provided to be rotatable about a cylindrical axis thereof and to be tiltable about a horizontal axis which crosses the cylindrical axis at right angle (See the phantom lines in Fig. 1). A firebrick, which has a heat resistance to the temperature of more than 1,600° C at the time of melting the ashes of the wastes, is provided with the inside wall of the rotary furnace 1.

As shown in Fig. 1 (omitted in Fig. 2), a burner of oxygen type 2, which uses an oxygen gas of 50% density and fuel, is provided at the opening 1a of the rotary furnace 1 to open and close the opening 1a. The construction of the burner 2 is well know and therefore its detailed descrition is omitted here. Tilt of the rotary furnace 1 is carried out in order to flow out the molten and vitrified object from the opening 1b after finish of melting. The burner of oxygen type 2 is removed from the opening 1a when the materials including the wastes and additives are thrown into the rotary furnace 1. The numeral 1c shows supporting rails for rotation of the rotary furnace 1.

The numeral 3 is a waste thrower as waste throw means for transferring and supplying the wastes into the rotary furnace 1 in such a state that the burner of oxygen type 2 opens the opening 1a.

The waste thrower 3 is constructed to mix and throw soda ash, limestone, glass collets and other materials including the ashes of the wastes transferred from other waste incineration places.

Further, as shown in Fig. 1, the waste thrower 3 is so constructed as to move from a position facing the opening 1a of the rotary furnace 1 to a waste supplying position for receiving the wastes, and to throw the wastes received in the waste thrower 3 as it is inclined by means of an air cylinder, in such a state that the rotary furnace 1 is tilted as the opening 1a turns upward.

The numeral 4 is a bucket lift for supplying the wastes to the waste thrower 3 which is positioned in the waste supplying position. Beneath the bucket lift 4, a crusher 5 is arranged so that the waste conveyed by a dump truck may be thrown in the crusher 5 and that the crushed wastes may be supplied to the bucket 4.

A duct is faced against the opening 1b of the rotary furnace 1 and an exhaust gas is introduced to a cooling tower 6 (water). After the exaust gas is cooled in the cooling tower 6, it is introduced to a dust collector 7. In the way of the cooling tower 6 to the dust collector 7, a powder supplyer 8 adds, for example, slaked lime to the exhaust gas so as to reaction the slaked line to the material in the exhaust gas (SO₂).

The dust collector 7 is a type having a bag-filter the construction of which is well know, and therefore its detailed description is omitted here.

The object materials for incineration and melting are urban wastes ( combustible and incombustible materials ), their ashes, shredder dust ( such as automobile) and so forth.

As mentioned above, since heat of the rotary furnace 1 is continued from the state that the wastes are thrown and incinerated several times, the fuel cost for heating the rotary furnace 1 at a high temperature for melting can be saved for 30 ∼ 40%.

Next, the second embodiment of the invention will be described.

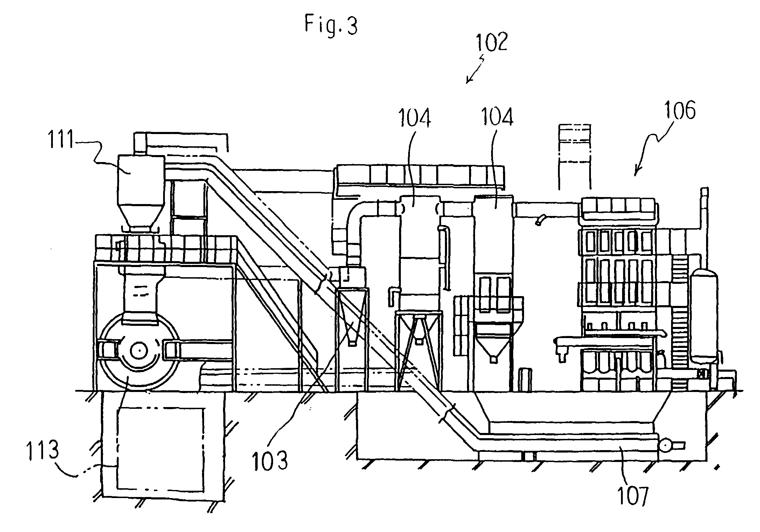

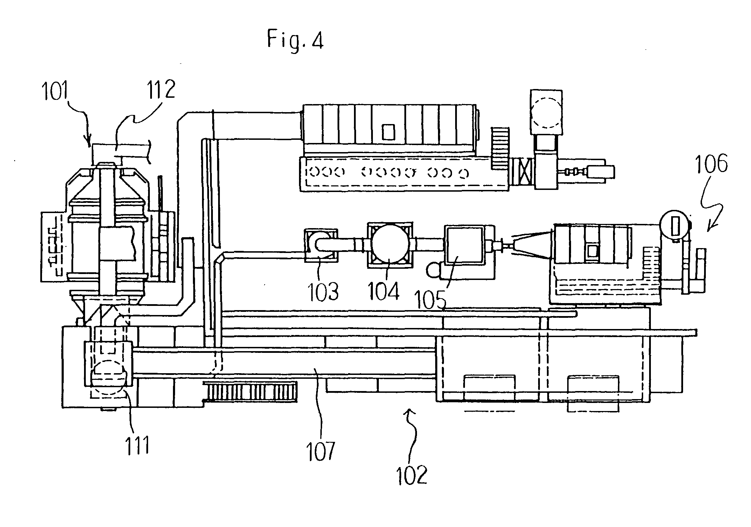

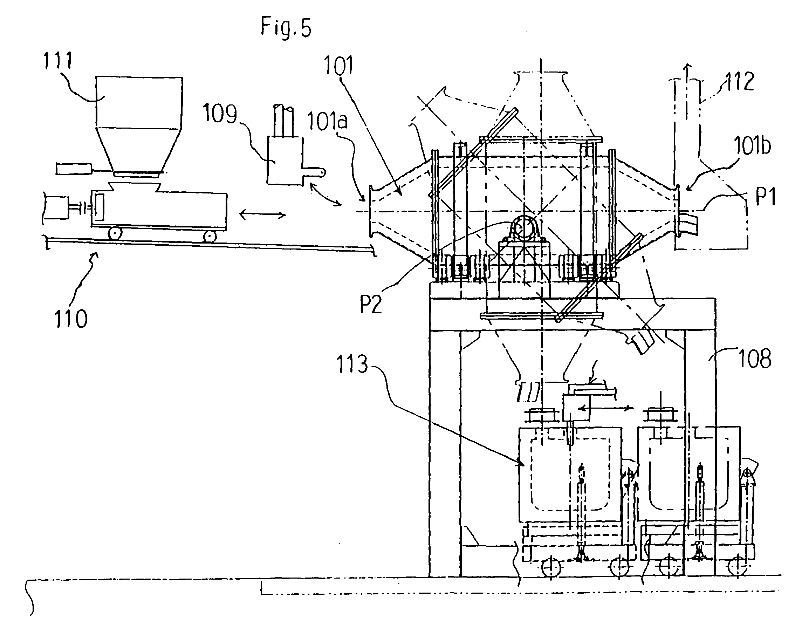

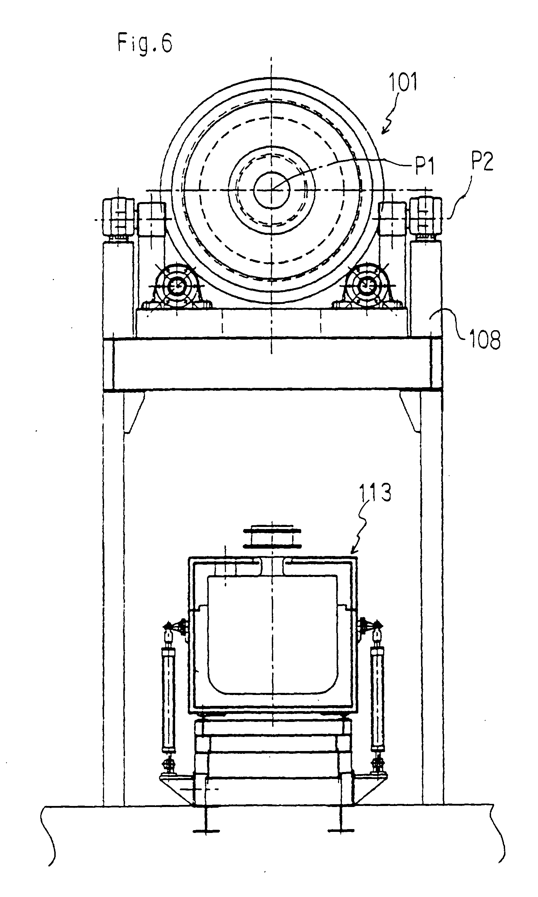

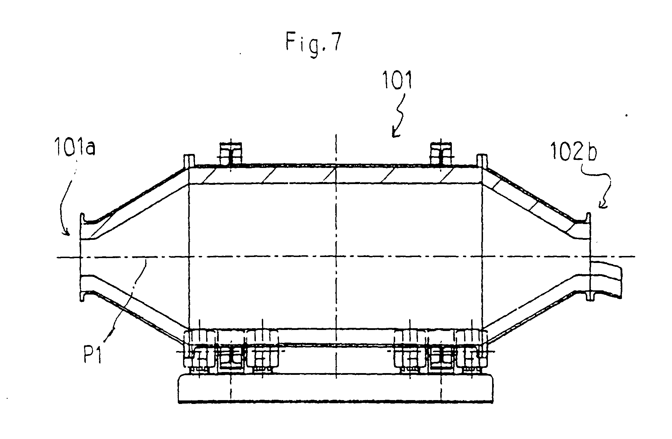

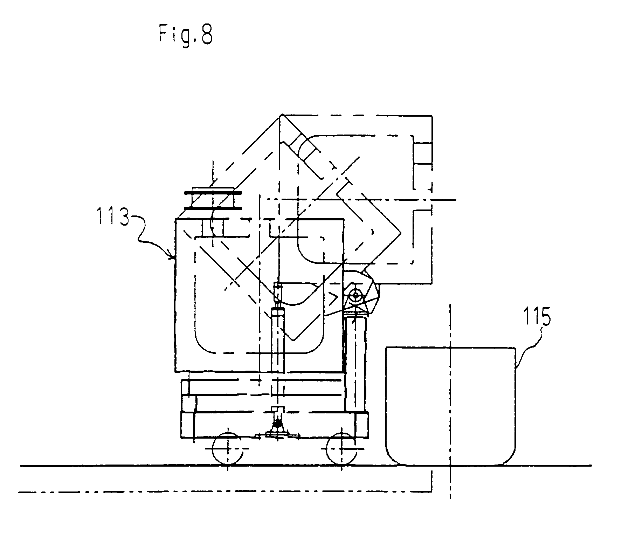

In this embodiment, the furnace for incineration and melting is separated. Figs. 3 and 4 show the apparatus for incineration and melting. The numeral 101 is a rotary furnace and its detailed construction will be described hereinafter on the basis of Figs. 5 through 7. The object materials for incineration and melting are, for example, urban wastes, the ashes thereof, shredder dusts (automobile scrap), and sludge or ooze in the river and sea. Fig. 2 shows a plan view of the apparatus for incinerating and melting the wastes and Fig. 8 shows a state of flowing out the molten material or slug from the melting furnace.

As shown in Figs. 3 and 4, the numeral 103 is a preduster to which the exhaust gas from the rotary furnace 101 and the dust in the exhaust gas is removed thereby. The preduster 103 has a well known construction using a mesh. The numeral 104 is a first cooling tower where the exhaust gas through the preduster 103 is cooled down a step with water cooling function.

The numeral 105 is a second cooling tower for cooling down the exhaust gas with water cooling function and it is so constructed as to function as a desulfurizer by mixing and feeding the powder of unslaked lime. The numeral 106 is a dust collector which is a type of housing a bag-filter for removing fine dust and fly ashes. The fine dust filtered by the bag-filter, is made to fall down by means of a vibrator which operates periodically and then collected to be transferred by a conveyor to a hopper arranged beside the melting furnace, which is referred to hereinafter. Then, the fine dust is molten together with the ashes which are discharged from the rotary furnace 101. The section, where such a removing operation is carried out, is called as the dust collector 102 in the present invention.

A density measuring instrument (not shown in the drawings) for measuring the density of oxygen in the exhaust gas, is provided with the duct which connected to the dust collector 106 and the measured data are feedbacked and a control valve for a burner of oxygen type, which is referred to hereinafter, can be controlled by means of a controller in such a state that the value of oxygen in the rotary furnace 101 normally exceeds at least 6%.

As shown in Figs. 5 through 7, the rotary furnace 101 is constructed to be substantially cylindrical having openings 101a and 101b at both ends thereof, and supported by a frame 108 to be rotatable about a cylindrical axis P1. The burner of oxygen type 109 for using an oxygen gas having a density of 50% and the fuel (LPG), is provided at the opening 1a of the rotary furnace 101 to open and close the opening 1a in a well known suitable manner. The burner of oxygen type 109 provides a regulator for regulating a mixing ratio of the fuel (LPG) and the oxygen gas of the predetermined density and also their volumes, and the burner is so constructed as to be controlled by the density measuring instrument for measuring the density of the oxygen gas, which is referred to hereinbefore.

The numeral 110 is a transporter as transfer means which is constructed to push the industrial wastes in an upper hopper 111 into the rotary furnace 101 by means of an air cylinder. In this case, the cylinder housing a piston of the air clyinder is made of ceramics having a heat resistance. Further, an exahust duct 112 is arranged to face the opening 1b of the rotary furnace 101 and then connected to the preduster 103.

A small melting furnace 113 is disposed beneath the rotary furnace 101 for receiving the ashes and the incombustible materials which are made fall from the rotary furnace 101 when the rotary furnace 101 is tilted. The melting furnace 113 provides a burner of oxygen type 114 using an oxygen gas of more than 50% density and the fuel (LPG). The burner of oxygen type 114 is arranged on a lid of the melting furnace, which lid is constructed to be closed and opened, and the burner radiates its flame downward. The burner, however, may be disposed at a suitable position such as the side wall of the melting furnace 113.

The melting furnace 113 is mounted on a base cart having wheels to move on the rails, so that the molten materials or slug may be moved to another place where they can be casted in the form of granule or callet with sudden cooling treatment. Fig. 8 shows a state of flowing the molten materials or slug into a ladle 115 at the moved place.

Incineration and melting of the wastes are carried out as follows.

First, the wastes are thrown by means of the transporter 110 into the rotary furnace 101 from the opening 101a.

Then, the opening 101a is closed by the burner 109 and the combustible materials of the wastes are incinerated with the fuel of LPG and the oxygen gas having a density of more than 50%. The combustible materials are burnt and the ashes thereof and the incombustible materials of the wastes are stored in the rotary furnace 101. The caloric powers of the combustible materials and the fuel for the burner 109, preheat the incombustible materials for melting.

The exhaust gas generated in the incineration process is introduced to the dust collector 102 having a bag-filter, via the duct which is connected to the opening 101b of the rotary furnace 101, and then discharged in the air. The density of oxygen in the exhaust gas of the rotary furnace is maintained at a value that sufficiently exceeds 6% ( the guide lines of the Ministry of Health and Welfare). At the same time, the value of C0 in the exhaust gas may be lowered under 50ppm, which is set in the guide lines of the Ministry of Health and Welfare.

After the incineration, the burner 109 is once stopped and removed from the rotary furnace 101 and the the rotary furnace 101 is tilted for transferring the ashes and the incombustible materials (metals and sludge) into the melting furance 113 at the high temperature of about 300° C ∼ 600° C.

In the melting furnace 113, a burner 114, which provides a mechanism for spraying an oxygen gas having a density of more than 50%, and a regulator for mixing the fuel of LPG and the oxygen gas, heats the ashes and incombustible materials at the very high temperature of about 1,500° C to 1,600° C, so as to melt these materials. At the time, the incineration using a high density of oxygen gas (more than 50% density) may keep the density of oxygen in the melting furnace 113, so as to greatly reduce generation of C0.

As mentioned above, since the ashes and incombustible materials are preheated in the rotary furnace 101 and continuned to be heated in the melting furnace 113, the fuel cost for melting can be saved for 30 ∼ 40%, in comparison with a conventional system in which the wastes and incombustible materials are once cooled at a room temperature and heated again for melting.

Further, at the time of melting, glass callets are thrown in order to give a sufficient strength to the molten materials or slug necessary for forming, for example, dressing tiles for a pavement. The ratio of the glass callets to the molten materials is 1 to 3, preferably. However, the ratio may be choosed desirably, for example, 4 to 1, 1 to 1, or 1 to 3.

A hood and a duct are provided on the melting furnace 113 and the exhaust gas is introduced therefrom to the preduster 103 of the dust collector 102 for dust collection, and the cleaned gas through the dust collection process is discharged in the air. Further, generation of C0 may be reduced greatly with the incineration utilizing the oxygen gas of high density.

Where an inert gas such as nitrogen is used in combination with the oxygen gas of 50% density, it becomes possible to produce the atmosphere which is difficult to generate a chemical reaction. As the result, it is expected to greatly lower the generation of dioxins, which are seemed to be produced with many kinds of conditions.

## Claims

1. An apparatus for incinerating and melting wastes comprising:
a rotary furnace (1) provided to be rotatable about a cylindrical axis thereof and to be tiltable about a horizontal axis which crosses the cylindrical axis at right angle, said rotary furnace (1) having an opening (1a, 1b) at both ends thereof respectively,
waste throwing means (3) for transferring and supplying wastes into the rotary furnace (1) through one opening thereof (1a), so as to repeat throw and incineration of the wastes for a plurality of times,
a burner (2) of oxygen type for using an oxygen gas of 50% density and a fuel, provided at one end of the rotary furnace (1) to open and close one opening thereof, said burner (2) being constructed to melt the ashes of the wastes at a temperature of more than 1,600°C, to be vitrified, and
a dust collector (7) connected to an exhaust duct which is connected to said another opening (1b) of the rotary furnace (1) for cleaning an exhaust gas generated through incineration and melting processes.

2. The apparatus for incinerating and melting wastes as claimed in claim 1, wherein at least a soda ash (Na₂CO₃) is thrown at the time of the melting step by mixing same with the wastes.

3. The apparatus for incinerating and melting wastes according to either of claims 1 or 2, wherein at least one of solid fuels selected from cokes, coal and charcoal in the form of powder or lump, is thrown prior to the incinerating step or the melting step for assisting the incineration and melting.

4. The apparatus for incinerating and melting wastes as claimed in claims 1 to 3, further comprising:
a crusher (5) for crushing the wastes prior to the waste throwing step.

5. An apparatus for incinerating and melting wastes comprising:
a rotary furnace (101) provided to be rotatable about a cylindrical axis thereof and to be tiltable about a horizontal axis which crosses the cylindrical axis at right angle, said rotary furnace (101) having an opening (101a, 101b) at both ends thereof respectively,
waste throwing means for transferring and supplying wastes into the rotary furnace through one opening thereof, so as to repeat throw and incineration of the wastes for a plurality of times,
a burner (109) of oxygen type for using an oxygen gas of 50% density and a fuel, provided at one end of the rotary furnace (101) to open and close one opening thereof,
a melting furnace (113) for receiving the wastes from the rotary furnace (101) for melting the same,
a melting burner (114) of oxygen type for using an oxygen gas of 50% density and a fuel, provided with the melting furnace (113) and constructed to melt the ashes of the wastes at a temperature of more than 1,600°C, to be vitrified, and
a dust collector (102) connected to an exhaust duct which is connected to said another opening (101b) of the rotary furnace (101) and another exhaust duct which is connected to the opening of the melting furnace for cleaning the exhaust gas generated through incineration and melting processes.

6. A method of incinerating and melting wastes using the apparatus of claim 1, comprising the steps of:
throwing wastes, by means of waste throwing means (3), from one opening (1a) of openings (1a, 1b) provided at both ends of a rotary furnace (1),
incinerating the wastes at a temperature from 800°C to 1,200°C, by means of a burner (2) of oxygen type for using an oxygen gas having a density of more than 50%, and a fuel, so as to reduce their volumes,
throwing again next wastes and incinerating the same,
repeating throw of wastes and incineration thereof for a plurality of times;
melting ashes of the wastes pooled in the rotary furnace (1) at a high temperature of more than 1,600°C, to be vitrified,
flowing out the molten ashes from the other opening (1b) of said openings (1a, 1b) of the rotary furnace (1) for vitrification and disposal, and
introducing an exhaust gas generated in the incinerating and melting processes from said another opening (1b) to a dust collector (7) for cleaning the same.

7. The method of incinerating and melting wastes according to claim 6, further comprising the step of:
throwing at least a soda ash (Na₂CO₃) at the time of the melting step.

8. The method of incinerating and melting wastes according to either of claims 6 or 7, further comprising the step of:
throwing at least one of solid fuels selected from cokes, coal and charcoal in the form of powder or lump, prior to the incinerating step or the melting step for assisting the incineration and melting.

9. A method of incinerating and melting wastes using the apparatus of claim 5, comprising the steps of:
throwing wastes, by means of waste throwing means, from one opening (101a) of openings (101a, 101b) provided with both ends of a rotary furnace (101),
incinerating the wastes at a temperature from 800°C to 1,200°C, by means of a burner (109) of oxygen type for using an oxygen gas having a density of more than 50%, and a fuel, so as to reduce their volumes,
throwing again next wastes and incinerating the same,
repeating throw of wastes and incineration thereof for a plurality of times,
transferring the ashes of the wastes to a melting furnace (113),
melting the ashes of the wastes and the remaining at a high temperature of more than 1,600°C, to be vitrified, and flowing out the molten object for disposal, and
introducing an exhaust gas generated in the incinerating and melting processes from said another opening (101b) of the rotary furnace (101) and an opening of the melting furnace (113) to a dust collector (102) for cleaning the same.

## Patentansprüche

1. Vorrichtung zum Verbrennen und Schmelzen von Abfällen, umfassend:
einen Drehofen (1), ausgestattet, drehbar zu sein um eine zylindrische Achse davon und kippbar zu sein um eine horizontale Achse, welche die zylindrische Achse im rechten Winkel kreuzt, wobei der Drehofen (1) eine Öffnung (1a, 1b) jeweils an beiden Enden davon hat,
Mittel zum Schütten von Abfall (3) zum Überführen und Einrühren von Abfällen in den Drehofen (1) durch eine Öffnung davon (1a), derart, um das Schütten und die Verbrennung der Abfälle für mehrere Male zu wiederholen,
einen Brenner (2) vom Sauerstoff-Typ zum Verwenden eines Sauerstoffgases von 50% Dichte und eines Brennstoffs, bereitgestellt an einem Ende des Drehofens (1), um eine Öffnung davon zu öffnen und zu schließen, wobei der Brenner (2) konstruiert ist, die Aschen der Abfälle bei einer Temperatur von mehr als 1600°C zu schmelzen, damit sie verglast werden, und
einen Staubsammler (7), verbunden mit einer Entlüftungsleitung, welche mit der anderen Öffnung (1b) des Drehofens (1) verbunden ist, zum Reinigen eines Abgases, das während des Verbrennungs- und Schmelzprozesses erzeugt wird.

2. Vorrichtung zum Verbrennen und Schmelzen von Abfällen nach Anspruch 1, wobei zumindest eine Soda-Asche (Na₂CO₃) zu der Zeit des Schmelzschrittes durch Mischen derselben mit den Abfällen zugeschüttet wird.

3. Vorrichtung zum Verbrennen und Schmelzen von Abfällen nach entweder Anspruch 1 oder 2, wobei mindestens einer von festen Brennstoffen, ausgewählt aus Koks, Kohle und Holzkohle, in Form von Pulver oder Stücken, vor dem Verbrennungsschritt oder dem Schmelzschritt zugeschüttet wird, um die Verbrennung und das Schmelzen zu unterstützen.

4. Vorrichtung zum Verbrennen und Schmelzen von Abfällen nach den Ansprüchen 1 bis 3, weiterhin umfassend:
ein Brechwerk (5) zum Brechen der Abfälle vor dem Schritt des Schüttens von Abfall.

5. Vorrichtung zum Verbrennen und Schmelzen von Abfällen, umfassend:
einen Drehofen (101), ausgestattet, drehbar zu sein um eine zylindrische Achse davon und kippbar zu sein um eine horizontale Achse, welche die zylindrische Achse im rechten Winkel kreuzt, wobei der Drehofen (101) eine Öffnung (101a, 101b) jeweils an beiden Enden davon hat,
Mittel zum Schütten von Abfall zum Überführen und Einführen von Abfällen in den Drehofen durch eine Öffnung davon, derart, um das Schütten und die Verbrennung der Abfälle für mehrere Male zu wiederholen,
einen Brenner (109) vom Sauerstoff-Typ zum Verwenden eines Sauerstoffgases von 50% Dichte und eines Brennstoffs, bereitgestellt an einem Ende des Drehofens (101), um eine Öffnung davon zu öffnen und zu schließen,
einen Schmelzofen (113) zum Aufnehmen der Abfälle aus dem Drehofen (101), um dieselben zu schmelzen,
einen Schmelzbrenner (114) vom Sauerstoff-Typ zum Verwenden eines Sauerstoffgases von 50% Dichte und eines Brennstoffs, bereitgestellt mit dem Schmelzofen (113) und konstruiert, die Aschen der Abfälle bei einer Temperatur von mehr als 1600°C zu schmelzen, damit sie verglast werden, und
einen Staubsammler (102), verbunden mit einer Entlüftungsleitung, welche mit der anderen Öffnung (101b) des Drehofens (101) und einer anderen Entlüftungsleitung verbunden ist, welche mit der Öffnung des Schmelzofens verbunden ist, zum Reinigen des Abgases, das während des Verbrennungs- und Schmelzprozesses erzeugt wird.

6. Vorrichtung zum Verbrennen und Schmelzen von Abfällen unter Verwendung der Vorrichtung nach Anspruch 1, umfassend die Schritte:
Schütten von Abfällen mittels des Mittels zum Schütten von Abfall (3) aus einer Öffnung (1a) von den Öffnungen (1a, 1b), die an beiden Enden eines Drehofens (1) bereitgestellt sind,
Verbrennen der Abfälle bei einer Temperatur von 800°C bis 1200°C mittels eines Brenners (2) vom Sauerstoff-Typ zum Verwenden eines Sauerstoffgases mit einer Dichte von mehr als 50% und eines Brennstoffs, derart, um deren Volumen zu verringern,
wiederum Schütten der nächsten Abfälle und Verbrennen derselben,
Wiederholen des Schüttens von Abfällen und deren Verbrennung für mehrere Male;
Schmelzen der Aschen der Abfälle, vereinigt in dem Drehofen (1), bei einer hohen Temperatur von mehr als 1600°C, damit sie verglast werden,
Ausfließen der geschmolzenen Aschen aus der anderen Öffnung (1b) von den Öffnungen (1a, 1b) des Drehofens (1) zur Verglasung und Entsorgung, und
Einführen eines Abgases, erzeugt in dem Verbrennungs- und Schmelzprozeß, aus der anderen Öffnung (1b) in einen Staubsammler (7), um dasselbe zu reinigen.

7. Verfahren zum Verbrennen und Schmelzen von Abfällen nach Anspruch 6, weiterhin umfassend den Schritt:
Zuschütten zumindest einer Soda-Asche (Na₂CO₃) zu der Zeit des Schmelzschrittes.

8. Verfahren zum Verbrennen und Schmelzen von Abfällen nach entweder Anspruch 6 oder 7, weiterhin umfassend den Schritt:
Zuschütten mindestens eines von festen Brennstoffen, ausgewählt aus Koks, Kohle und Holzkohle, in Form von Pulver oder Stücken, vor dem Verbrennungsschritt oder Schmelzschritt zur Unterstützung der Verbrennung und des Schmelzens.

9. Verfahren zum Verbrennen und Schmelzen von Abfällen unter Verwendung der Vorrichtung nach Anspruch 5, umfassend die Schritte:
Schütten von Abfällen mittels des Mittels zum Schütten von Abfall, aus einer Öffnung (101a) von den Öffnungen (101a, 101b), die mit beiden Enden eines Drehofens (101) bereitgestellt sind,
Verbrennen der Abfälle bei einer Temperatur von 800°C bis 1200°C mittels eines Brenners (109) vom Sauerstoff-Typ zum Verwenden eines Sauerstoffgases mit einer Dichte von mehr als 50% und eines Brennstoffs, derart, um deren Volumen zu verringern,
wiederum Schütten der nächsten Abfälle und Verbrennen derselben,
Wiederholen des Schüttens von Abfällen und deren Verbrennung für mehrere Male,
Überführen der Aschen der Abfälle in einen Schmelzofen (113),
Schmelzen der Aschen der Abfälle und des Rückstandes bei einer hohen Temperatur von mehr als 1600°C, damit sie verglast werden, und Ausfließen des geschmolzenen Gegenstands zur Entsorgung, und
Einführen eines Abgases, erzeugt in dem Verbrennungs- und Schmelzprozeß, aus der anderen Öffnung (101b) des Drehofens (101) und einer Öffnung des Schmelzofens (113) in einen Staubsammler (102), um dasselbe zu reinigen.

## Revendications

1. Appareil pour l'incinération et la fusion de déchets comprenant:
un four rotatif (1) prévu pour pouvoir tourner autour de l'axe cylindrique de celui-ci et pour pouvoir osciller autour d'un axe horizontal qui coupe l'axe cylindrique avec un angle droit, ledit four rotatif (1) possédant une ouverture (1a, 1b) aux deux extrémités de celui-ci respectivement,
un dispositif pour jeter les déchets (3) afin de transférer et d'approvisionner les déchets dans le four rotatif (1) par une ouverture de celui-ci (1a), de manière à répéter plusieurs fois l'action de jeter et d'incinérer les déchets,
un brûleur (2) de type à oxygène destiné à utiliser de l'oxygène gazeux avec une densité de 50% et un combustible, prévu à une extrémité du four rotatif (1) pour ouvrir et fermer une ouverture de celui-ci, ledit brûleur (2) étant construit pour fondre les cendres des déchets à une température de plus de 1.600°C, afin qu'elles soient vitrifiées, et
un séparateur de poussières (7) relié à un conduit d'évacuation qui est relié à ladite autre ouverture (1b) du four rotatif (1) pour nettoyer un gaz de combustion généré par les procédés d'incinération et de fusion.

2. Appareil pour l'incinération et la fusion de déchets suivant la revendication 1, dans lequel au moins de la soude calcinée (Na₂CO₃) est jetée au moment de l'étape de fusion en mélangeant cette dernière avec les déchets.

3. Appareil pour l'incinération et la fusion de déchets suivant l'une ou l'autre des revendications 1 et 2, dans lequel au moins un des combustibles solides choisis parmi des cokes, du charbon et du charbon de bois, sous la forme d'une poudre ou de morceaux, est jeté avant l'étape d'incinération ou l'étape de fusion pour aider à l'incinération et la fusion.

4. Appareil pour l'incinération et la fusion de déchets suivant les revendications 1 à 3, comprenant en outre:
un broyeur (5) pour broyer les déchets avant l'étape consistant à jeter les déchets.

5. Appareil pour l'incinération et la fusion de déchets comprenant:
un four rotatif (101) prévu pour pouvoir tourner autour de l'axe cylindrique de celui-ci et pour pouvoir osciller autour d'un axe horizontal qui coupe l'axe cylindrique avec un angle droit, ledit four rotatif (101) possédant une ouverture (101a, 101b) aux deux extrémités de celui-ci respectivement,
un dispositif pour jeter les déchets afin de transférer et d'approvisionner les déchets dans le four rotatif par une ouverture de celui-ci, de manière à répéter plusieurs fois l'action de jeter et d'incinérer les déchets,
un brûleur (109) de type à oxygène destiné à utiliser de l'oxygène gazeux avec une densité de 50% et un combustible, prévu à une extrémité du four rotatif (101) pour ouvrir et fermer une extrémité de celui-ci,
un four de fusion (113) pour recevoir les déchets issus du four rotatif (101) afin de fondre ces derniers,
un brûleur de fusion (114) de type à oxygène destiné à utiliser de l'oxygène gazeux avec une densité de 50% et un combustible, prévu avec le four de fusion (113) et construit pour fondre les cendres des déchets à une température de plus de 1.600°C, afin qu'elles soient vitrifiées, et
un collecteur de poussière (102) relié à un conduit d'évacuation qui est relié à ladite autre ouverture (101b) du four rotatif (101) et à un autre conduit d'évacuation qui est relié à l'ouverture du four de fusion pour nettoyer le gaz de combustion généré par les procédés d'incinération et de fusion.

6. Procédé pour l'incinération et la fusion de déchets en utilisant l'appareil suivant la revendication 1, comprenant les étapes consistant:
à jeter les déchets, au moyen d'un dispositif pour jeter les déchets (3), à partir d'une ouverture (1a) parmi les ouvertures (1a, 1b) prévues aux deux extrémités d'un four rotatif(1),
à incinérer les déchets à une température de 800°C à 1.200°C, au moyen d'un brûleur (2) de type à oxygène destiné à utiliser de l'oxygène gazeux avec une densité de plus de 50% et un combustible, de manière à réduire leurs volumes,
à jeter de nouveau les déchets suivants et à incinérer ces derniers,
à répéter plusieurs fois l'action de jeter les déchets et de les incinérer,
à fondre les cendres des déchets mises en commun dans le four rotatif (1) à une température élevée de plus de 1.600°C, afin qu'elles soient vitrifiées,
à faire sortir les cendres fondues à partir de l'autre ouverture (1b) parmi lesdites ouvertures (1a, 1b) du four rotatif (1) en vue d'une vitrification et d'une mise au rebut, et
à introduire un gaz de combustion généré dans les procédés d'incinération et de fusion provenant de ladite autre ouverture (1b) vers un séparateur de poussières (7) pour nettoyer ce dernier.

7. Procédé pour l'incinération et la fusion de déchets suivant la revendication 6, comprenant en outre l'étape consistant:
à jeter au moins de la soude calcinée (Na₂CO₃) au moment de l'étape de fusion.

8. Procédé pour l'incinération et la fusion de déchets suivant l'une ou l'autre des revendications 6 et 7, comprenant en outre l'étape consistant:
à jeter au moins un des combustibles solides choisis parmi des cokes, du charbon et du charbon de bois, sous la forme d'une poudre ou de morceaux, avant l'étape d'incinération ou l'étape de fusion pour aider à l'incinération et à la fusion.

9. Procédé pour l'incinération et la fusion de déchets en utilisant l'appareil suivant la revendication 5, comprenant les étapes consistant:
à jeter les déchets, au moyen d'un dispositif pour jeter les déchets, à partir d'une ouverture (101a) parmi les ouvertures (101a, 101b) prévues aux deux extrémités d'un four rotatif (101),
à incinérer les déchets à une température de 800°C à 1.200°C, au moyen d'un brûleur (109) de type à oxygène destiné à utiliser de l'oxygène gazeux avec une densité de plus de 50% et un combustible, de manière à réduire leurs volumes,
à jeter de nouveau les déchets suivants et à incinérer ces derniers,
à répéter plusieurs fois l'action de jeter les déchets et de les incinérer,
à transférer les cendres des déchets vers un four de fusion (113),
à fondre les cendres des déchets et les résidus à une température élevée de plus de 1.600°C, afin qu'ils soient vitrifiés et à faire sortir l'objet fondu en vue d'une mise au rebut, et
à introduire un gaz de combustion généré dans les procédés d'incinération et de fusion provenant de ladite autre ouverture (101b) du four rotatif (101) et d'une ouverture du four de fusion (113) vers un séparateur de poussières (102) pour nettoyer ce dernier.
